# EUROPEAN PATENT APPLICATION

(11) **EP 3 416 044 A1**
(43) Date of publication of application: **19.12.2018**
(21) Application number: 18176586.8
(22) Date of filing: 07.06.2018
(51) Int. Cl.: G06F 8/61

(54) **IMAGE FORMING APPARATUS AND CONTROL METHOD OF IMAGE FORMING APPARATUS**

(30) Priority: 16.06.2017 JP 2017118328
(71) Applicant: Kabushiki Kaisha Toshiba, Minato-ku Tokyo 105-8001 (JP); Toshiba TEC Kabushiki Kaisha, Tokyo 141-8562 (JP)
(72) Inventor: SASAKI, Takahiro, Shinagawa-ku,, Tokyo 141-8562 (JP)
(74) Representative: Takeuchi, Maya

(57) **Abstract**

An image forming apparatus includes a storage device in which an execution environment is installed, and a processor configured to determine whether or not an application is to be installed based on a version of the application and a version of the execution environment, and to install the application upon determining that the version of the application and the version of the execution environment are compatible.

## Description

### FIELD

The present invention relates to the field of an image forming technology in general, and embodiments described herein relate in particular to an image forming apparatus and a control method of the image forming apparatus.

### BACKGROUND

In an image forming apparatus such as a multifunction peripheral (MFP), there is a case in which a version of an execution environment for application software, or the like, is upgraded. In addition, in the image forming apparatus, there is a case in which versions of the execution environment are different due to a difference in type of the image forming apparatus, a shipment timing of the image forming apparatus from the factory, or the like. In addition, there is a case in which the version of the execution environment is upgraded with no backward compatibility. For this reason, in such an image forming apparatus, there is a case in which the upgraded version of the execution environment is not compatible with installed application software, or the like, and so the installed application software cannot be executed or causes an unintended behavior even when the application software can be executed.

To solve such problem, there is provided an image forming apparatus comprising: a storage device in which an execution environment is installed; a processor configured to determine whether or not an application is to be installed based on a version of the application and a version of the execution environment, and to install the application upon determining that the version of the application and the version of the execution environment are compatible.

Preferably, the processor does not install the application upon determining that the version of the application and the version of the execution environment are not compatible.

Preferably still, the processor determines that the version of the application and the version of the execution environment are not compatible when the versions do not match.

Preferably yet, the application is compatible with a plurality of versions of the execution environment, and the processor selects one of the versions of the execution environment that are compatible with the application as the execution environment in which the application is to be executed.

Suitably, the processor selects a most recent version of said one of the versions of the execution environment that are compatible with the application as the execution environment in which the application is to be executed.

Suitably still, the processor is further configured to determine whether or not an installed application is to be executed in the execution environment based on the version of the installed application and the version of the execution environment, and to execute the installed application in the execution environment upon determining that the version of the installed application and the version of the execution environment are compatible.

Suitably yet, the processor does not execute the installed application in the execution environment upon determining that the version of the installed application and the version of the execution environment are not compatible.

Typically, upon determining that the version of the installed application and the version of the execution environment are not compatible, the processor converts the installed application so that the installed application after conversion is compatible with the version of the execution environment.

Typically still, upon determining that the version of the application and the version of the execution environment are not compatible, the processor converts the application so that the application after conversion is compatible with the version of the execution environment.

Typically yet, upon determining that the version of the application and the version of the execution environment are not compatible, the processor generates a request to be transmitted to a server for a version of the application that is compatible with the version of the execution environment.

The invention also relates to a method of enforcing compatibility between an application and an execution environment installed in an image forming apparatus, said method comprising: determining whether or not an application is to be installed in the image forming apparatus based on a version of the application and a version of the execution environment; and installing the application upon determining that the version of the application and the version of the execution environment are compatible.

Preferably, the method further comprises: upon determining that the version of the application and the version of the execution environment are not compatible, not installing the application.

Preferably still, in the method, the version of the application and the version of the execution environment are not compatible when the versions do not match.

Preferably yet, in the method, the application is compatible with a plurality of versions of the execution environment, the method comprises: selecting one of the versions of the execution environment that are compatible with the application as the execution environment in which the application is to be executed.

Suitably, in the method, a most recent version of said one of the versions of the execution environment that are compatible with the application is selected as the execution environment in which the application is to be executed.

Suitably still, the method further comprises: determining whether or not an installed application is to be executed in the execution environment based on the version of the installed application and the version of the execution environment; and executing the installed application in the execution environment upon determining that the version of the installed application and the version of the execution environment are compatible.

Suitably yet, the method further comprises: upon determining that the version of the installed application and the version of the execution environment are not compatible, not executing the installed application.

Typically, the method further comprises: upon determining that the version of the installed application and the version of the execution environment are not compatible, converting the installed application so that the installed application after conversion is compatible with the version of the execution environment.

Typically still, the method further comprises: upon determining that the version of the application and the version of the execution environment are not compatible, converting the application so that the application after conversion is compatible with the version of the execution environment.

Typically yet, the method further comprises: upon determining that the version of the application and the version of the execution environment are not compatible, generating a request to be transmitted to a server for a version of the application that is compatible with the version of the execution environment.

The invention also concerns a non-transitory computer readable medium storing a program causing a computer to execute the method described above.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a block diagram which illustrates a circuit configuration of main components of an image forming apparatus according to a first to fifth embodiments.
FIG. 2 is a flowchart of control processing according to the first to third embodiments using a processor in FIG. 1.
FIG. 3 is a flowchart of control processing according to the fourth embodiment using the processor in FIG. 1.
FIG. 4 is a flowchart of control processing according to the fifth embodiment using the processor in FIG. 1.
FIG. 5 is a block diagram which illustrates an image forming system according to a sixth embodiment, and a circuit configuration of main components of an image forming apparatus which is included in the image forming system.
FIG. 6 is a flowchart of control processing according to the sixth embodiment.

### DETAILED DESCRIPTION

Embodiments provide an image forming apparatus, and a control method of the image forming apparatus, in which a program is normally operated, even though an execution environment for the program has undergone a version upgrade.

An image forming apparatus according to an embodiment, includes a storage device in which an execution environment is installed, and a processor configured to determine whether or not an application is to be installed based on a version of the application and a version of the execution environment, and to install the application upon determining that the version of the application and the version of the execution environment are compatible.

Hereinafter, an image forming apparatus according to several embodiments will be described with reference to drawings.

### First Embodiment

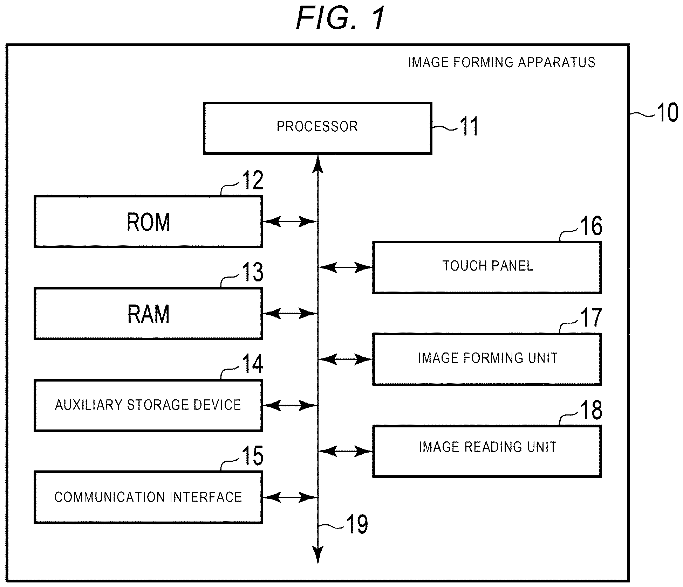

FIG. 1 is a block diagram which illustrates a circuit configuration of main components of an image forming apparatus 10 according to a first embodiment. The image forming apparatus 10 has a function of performing printing by forming an image on paper, or a sheet-shaped resin recording medium, or the like. In addition, the image forming apparatus 10 has a function of performing scanning by reading an image formed on the sheet-shaped recording medium, or the like. The image forming apparatus 10 has a function of performing copying by reading the image formed on the sheet-shaped recording medium, or the like, and printing the image on another sheet-shaped recording medium based on the read image. In addition to that, the image forming apparatus 10 has various functions. The image forming apparatus 10 is, for example, an MFP. The image forming apparatus 10 includes a processor 11, a read only memory (ROM) 12, a random access memory (RAM) 13, an auxiliary storage device 14, a communication interface 15, a touch panel 16, an image forming unit 17, an image reading unit 18, and a bus 19.

The processor 11 operates as a control center of a computer which performs processing of an operation, a control, and the like, which are necessary for an operation of the image forming apparatus 10. The computer is an example of a control unit. The processor 11 controls each unit of the image forming apparatus 10 which ought to execute various functions thereof, based on system software, application software, or firmware stored in the ROM 12, the auxiliary storage device 14, or the like. The processor 11 is, for example, a central processing unit (CPU), a micro processing unit (MPU), a system on a chip (SoC), a digital signal processor (DSP), a graphic processing unit (GPU), or the like. Alternatively, the processor 11 may be a combination thereof. The processor 11 is an example of a control unit.

The ROM 12 is a non-volatile memory which is used only in reading of data. The ROM 12 stores data, various setting values, and the like, which are used when the processor 11 performs various processing, in addition to the above described program.

The RAM 13 is a memory which is used in reading and writing of data. The RAM 13 stores data which is temporarily used as a so-called work area when the processor 11 performs various processing.

The auxiliary storage device 14 is, for example, an electric erasable programmable read-only memory (EEPROM), a hard disk drive (HDD), a solid state drive (SSD), or the like. The auxiliary storage device 14 stores data which is used when the processor 11 performs various processing, and data, various setting values, or the like, generated by processing in the processor 11, in addition to the above described program. In addition, the image forming apparatus 10 may be provided with an interface such as a card slot to which a storage medium such as a memory card, or a universal serial bus (USB) memory can be inserted, instead of the auxiliary storage device 14, or in addition to the auxiliary storage device 14.

The program which is stored in the ROM 12, the auxiliary storage device 14, or the like, includes a control program for carrying out control processing, which will be described later. As an example, the image forming apparatus 10 is acquired in a state in which the control program is already stored in the ROM 12 or the auxiliary storage device 14. However, the control program does not always need to be stored in the ROM 12 or the auxiliary storage device 14. In addition, the image forming apparatus 10 may be acquired in a state in which a control program which is different from the control program described above is stored in the ROM 12 or the auxiliary storage device 14. In addition, the control program acquired separately, and may be written in the ROM 12 or the auxiliary storage device 14 under an operation of a service person, or the like. The control program can be acquired, for example, by being read from a removable recording medium such as a magnetic disk, a magneto-optical disk, an optical disk, or a semiconductor memory, or by being downloaded through a network.

In addition, the program stored in the auxiliary storage device 14, or the like, includes application software (hereinafter, referred to as "installed application") to add a function, or the like, to the image forming apparatus 10. In one example, the image forming apparatus 10 is acquired in a state in which the installed application is not stored in the ROM 12 or the auxiliary storage device 14. In such situations, the installed application is separately acquired and written in the auxiliary storage device 14, or the like, under an operation of a manager who manages the image forming apparatus 10, a service operation, or the like. However, the image forming apparatus 10 may be acquired in a state in which the installed application is stored in the ROM 12 or the auxiliary storage device 14. in the installed application can be acquired, for example, by being read from a removable recording medium such as a magnetic disk, a magneto-optical disk, an optical disk, or a semiconductor memory, or by being downloaded through a network.

The installed application is executed in an execution environment installed in the image forming apparatus 10. The installed application in the image forming apparatus 10 includes version information which denotes a version of an execution environment with which the installed application is compatible.

An execution environment for executing the installed application is installed in the image forming apparatus 10. The execution environment includes a run time, or the like, for executing a program of the installed application, and for executing a program which is described in a specific programming language. The installed execution environment is stored in the ROM 12, or the auxiliary storage device 14. The ROM 12 or the auxiliary storage device 14 also stores a version of the installed execution environment.

In one example, the image forming apparatus 10 is acquired in a state in which a specific execution environment is installed. The image forming apparatus 10 may have a configuration in which an execution environment of a version which is different from the specific execution environment is installed therein, and a version upgrade of the execution environment to a different version, or an overwrite installation is performed under an operation by a service person, or the like. A different execution environment can be acquired, for example, by being read from a removable recording medium such as a magnetic disk, a magneto-optical disk, an optical disk, or a semiconductor memory, or by being downloaded through a network.

The communication interface 15 is an interface in which the image forming apparatus 10 communicate with another device, or the like, through a network, a communication cable, or the like.

The touch panel 16 functions as a display device which displays a screen for notifying an operator of the image forming apparatus 10 of various information. In addition, the touch panel 16 functions as an input device which receives a touching operation by the operator.

The image forming unit 17 forms an image, or the like, on paper, a sheet-shaped resin recording medium, or the like. For this reason, the image forming unit 17 is provided with a printer such as a laser printer or an ink jet printer, for example.

The image reading unit 18 reads an image from a recording medium, or the like, of a sheet-shaped recording medium such as paper. For this reason, the image reading unit 18 is provided with a scanner, or the like. The scanner is, for example, a scanner of an optical reduction type which is provided with an imaging element such as a charge coupled device (CCD) image sensor. Alternatively the scanner is a type of a contact image sensor (CIS) which is provided with an imaging element such as a complementary metal-oxide-semiconductor (CMOS) imaging sensor. Alternatively, the scanner may be a well-known type other than those.

The bus 19 includes a control bus, an address bus, a data bus, and the like, and transmits a signal which is delivered in each of the units of the image forming apparatus 10.

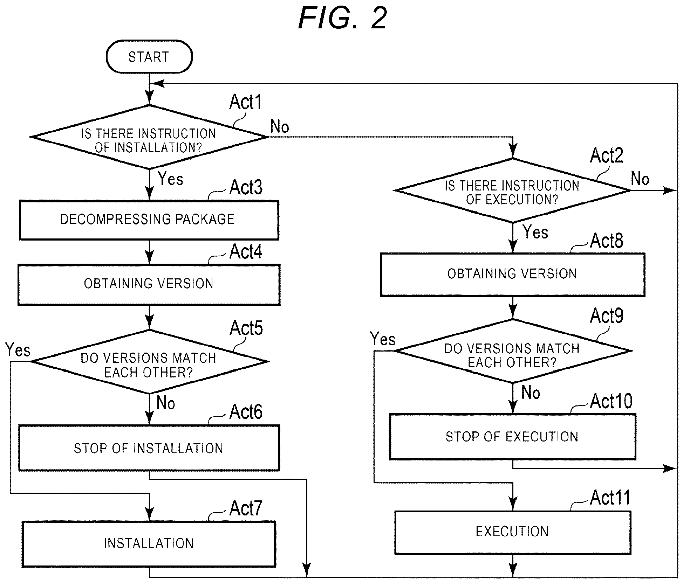

Hereinafter, an operation of the image forming apparatus 10 according to the first embodiment will be described based on FIG. 2. Contents of processing in the following descriptions of the operation are examples, and it is possible to appropriately use various processing from which the same result can be obtained. FIG. 2 is a flowchart of control processing using the processor 11 of the image forming apparatus 10. The processor 11 executes the control processing based on a control program which is stored in the ROM 12, the auxiliary storage device 14, or the like.

The processor 11 of the image forming apparatus 10 in Act 1 in FIG. 2 determines whether or not an operation of instructing an installation of an application is performed. When the operation of instructing an installation of the application is not performed, the processor 11 determines No in Act 1, and proceeds to Act 2.

In Act 2, the processor 11 determines whether or not an operation of instructing an execution of the installed application is performed. When the operation of instructing the execution of the installed application is not performed, the processor 11 determines No in Act 2, and proceeds to Act 3. In this manner, the processor 11 repeats Act 1 and Act 2 until the operation of instructing an installation of the application is performed, or the operation of instructing an execution of an installed application is performed.

When it is desired to install the application in the image forming apparatus 10, a manager of the image forming apparatus 10, a service person, or the like, sets up the image forming apparatus 10 to access an installation package, or the like, which is necessary for installation of the application. In addition, the manager of the image forming apparatus 10, a service person, or the like, is an example of an operator of the image forming apparatus 10. In order to set up the image forming apparatus 10 to access the installation package, or the like, for example, the service person, or the like, connects a USB memory, or the like, which stores the installation package, or the like, to the image forming apparatus 10. Alternatively, for example, the service person, or the like, connects a personal computer (PC) which stores the installation package, or the like, to the image forming apparatus 10 through the communication interface 15, and a network, for example. In addition, the service person, or the like, instructs the image forming apparatus 10 to install the application by operating the touch panel 16, or the like. For example, information denoting a location of the installation package, or the like, is included in the instruction. In addition, the above described installation package includes information of a version denoting a version of an execution environment with which the application in the installation package is compatible.

If the operation of instructing an installation of the application is performed, when Act 1 and Act 2 are in a waiting state, the processor 11 proceeds to Act 3 by determining Yes in Act 1.

In Act 3, the processor 11 decompresses the installation package. The installation package is, for example, located at a location in a storage medium such as a USB memory, or the like, denoted by the information included in the instruction received in the processing in Act 1. The processor 11 proceeds to Act 4 after the processing in Act 3.

In Act 4, the processor 11 obtains version information from the installation package which is decompressed in Act 3. The processor 11 proceeds to Act 5 after the processing in Act 4.

In Act 5, the processor 11 determines whether or not a version denoted by version information obtained in Act 4, and a version of an execution environment currently installed in the image forming apparatus 10 match each other. When the versions do not match, the processor 11 proceeds to Act 6 by determining No in Act 5.

In Act 6, the processor 11 stops the installation of the application in the installation package that has been decompressed in Act 3. After the processing in Act 6, the processor 11 returns to Act 1.

In contrast to this, when the versions match in Act 5, the processor 11 determines Yes, and proceeds to Act 7.

In Act 7, the processor 11 installs the application in the installation package that has been decompressed in Act 3. After the processing in Act 7, the processor 11 returns to Act 1.

As described above, in the processing of Act 5, the processor 11 determines whether or not an application is to be installed, based on whether or not the version of the application matches a version of an execution environment in which the application is to be executed.

When it is desired to use the application installed in the image forming apparatus 10, a user of the image forming apparatus 10 instructs the image forming apparatus 10 to execute the installed application by operating the touch panel 16, or the like.

When the operation of instructing an execution of the installed application is performed in a waiting state in Act 1 and Act 2, the processor 11 determines Yes in Act 2, and proceeds to Act 8.

In Act 8, the processor 11 obtains version information denoting a version of an execution environment in which the installed application is to be executed in Act 2. After Act 8, the processor 11 proceeds to Act 9.

In Act 9, the processor 11 determines whether or not a version denoted by version information obtained in Act 8, and a version of an execution environment currently installed in the image forming apparatus 10 match each other. When the versions do not match each other, the processor 11 determines No in Act 9, and proceeds to Act 10.

In Act 10, the processor 11 stops an execution of the installed application which is instructed so as to be executed in Act 2. In addition, the processor 11 instructs the touch panel 16 to display an image denoting that the installed application did not launch, and prompting an upgrade of the installed application. When receiving the instruction, the touch panel 16 displays the image. After Act 10, the process returns to Act 1.

In contrast to this, when the versions match each other, the processor 11 in Act 9 determines Yes, and proceeds to Act 11.

In Act 11, the processor 11 executes the installed application which is instructed so as to be executed in Act 2. After Act 11, the processor 11 returns to Act 1.

The image forming apparatus 10 according to the first embodiment does not install an application, when the versions of the application and an execution environment in which the application is to be executed, do not match. When such an application is executed in the image forming apparatus 10 in which a compatible execution environment is not installed, it is inferred that the application has a high possibility of performing an unintended operation compared to a case in which a compatible execution environment is installed. Accordingly, the image forming apparatus 10 can prevent the unintended operation of the application, by not installing the application.

In addition, the image forming apparatus 10 according to the first embodiment does not execute an installed application when the versions of the application and an execution environment in which the installed application is to be executed, do not match. Accordingly, the image forming apparatus 10 can prevent an unintended operation of the installed application. In addition, in the image forming apparatus 10, there is a case in which a version of an execution environment installed in the image forming apparatus 10 is changed due to a version upgrade, or the like. In such a case, there is a case in which the installed application and the execution environment, which were compatible before the version upgrade, is no longer compatible after the version upgrade. In this case, also, the image forming apparatus 10 does not execute the installed application. Accordingly, the image forming apparatus 10 can prevent an unintended operation of the installed application. In many cases, a version upgrade of the execution environment, or the installation of an application is performed manually by a service person, or the like. By preventing the installed application, which may not normally function, from being executed, the cost for maintenance services may be reduced.

### Second Embodiment

Hereinafter, an image forming apparatus 10 according to a second embodiment will be described. Since the image forming apparatus 10 according to the second embodiment has the same configuration as that in the image forming apparatus 10 in the first embodiment, descriptions thereof will be omitted.

An operation of the image forming apparatus 10 in the second embodiment will be described based on FIG. 2, similarly to the first embodiment. However, there is a case in which descriptions of the same processing as that in the first embodiment will be omitted.

According to the second embodiment, the installed application is compatible with a plurality of versions of the execution environment. Since the installed application is compatible with the plurality of versions of the execution environment, version information included in an installation package of an application denotes a plurality of versions.

According to the second embodiment, in Act 5, the processor 11 checks whether or not any one of the plurality of versions denoted by version information obtained in Act 4 matches a version of an execution environment which is installed in the image forming apparatus 10.

According to the second embodiment, in Act 7, the processor 11 installs the version of the installed application that is compatible with the version of the execution environment. There is a case in which the installed application which is installed at this time also corresponds to an execution environment of another version, not only an execution environment of the selected version, depending on a function, or the like, which is used. Accordingly, version information included in the installed application denotes one, or a plurality of versions including the selected version.

According to the second embodiment, in Act 9, the processor 11 determines whether or not any one of the plurality of versions denoted by a version of the execution environment obtained in Act 8 matches a version of software of the execution environment currently installed in the image forming apparatus 10.

The image forming apparatus 10 according to the second embodiment obtains the same effect as that in the image forming apparatus 10 according to the first embodiment.

The version of an execution environment installed in the image forming apparatus 10 varies depending on a shipment timing from the factory, or whether or not a version upgrade has been executed. Accordingly, in the related art, when a service person, or the like, wants to install the installed application in the image forming apparatus 10, it was necessary to prepare installed applications which were first confirmed as being compatible with various versions. The image forming apparatus 10 according to the second embodiment installs an application corresponding to execution environments of a plurality of versions. For this reason, when a service person, or the like, wants to install the application in the image forming apparatus 10, it is not necessary to prepare a plurality of applications corresponding to execution environments of various versions.

### Third Embodiment

Hereinafter, an image forming apparatus 10 according to a third embodiment will be described. Since the image forming apparatus 10 according to the third embodiment has the same configuration as that according to the first embodiment, descriptions thereof will be omitted.

An operation of the image forming apparatus 10 according to the third embodiment will be described based on FIG. 2, similarly to the first embodiment. However, there is a case in which descriptions of the same processing as that in the first embodiment is omitted.

In the third embodiment, the application corresponds to execution environments of a plurality of versions, similarly to that in the second embodiment.

According to the third embodiment, in Act 5, the processor 11 checks whether or not any one of the plurality of versions denoted by version information obtained in Act 4 matches a version of an execution environment currently installed in the image forming apparatus 10.

According to the third embodiment, in Act 7, the processor 11 installs the application so as to correspond to the version matched in Act 5. At this time, the processor 11 installs the application so as to be also operated in an execution environment of another version, not only in an execution environment of a version which is installed in the image forming apparatus 10. Accordingly, version information included in the installed application denotes a plurality of versions. In addition, since the installed application corresponds to a plurality of versions in the third embodiment, there is a case of performing a different operation according to a version of an execution environment.

According to the third embodiment, in Act 9, the processor 11 determines whether or not any one of the plurality of versions denoted by a version of the execution environment which is obtained in Act 8 matches a version of an execution environment which is installed in the image forming apparatus 10.

According to the third embodiment, in Act 11, the processor 11 executes the installed application in the execution environment which has a matching version and is installed in the image forming apparatus 10.

The image forming apparatus 10 according to the third embodiment can obtain the same effect as that of the image forming apparatus 10 according to the first embodiment.

In addition, the image forming apparatus 10 according to the third embodiment installs an application corresponding to execution environments of a plurality of versions. The image forming apparatus 10 executes the installed application according to a version of the execution environment which is installed in the image forming apparatus 10. Accordingly, the image forming apparatus 10 according to the third embodiment can obtain the same effect as that of the image forming apparatus 10 according to the second embodiment. In addition, the installed application corresponds to execution environments of a plurality of versions by performing a different operation according to a version of an execution environment. Accordingly, the installed application has a high possibility of being normally operated, even when a version of an execution environment of the image forming apparatus 10 is changed due to a version upgrade, or the like, compared to a installed application which does not perform a different operation corresponding to a version of an execution environment.

### Fourth Embodiment

Hereinafter, an image forming apparatus 10 according to a fourth embodiment will be described. Since the image forming apparatus 10 according to the fourth embodiment has the same configuration as that in the image forming apparatuses 10 according to the first to third embodiments, descriptions thereof will be omitted.

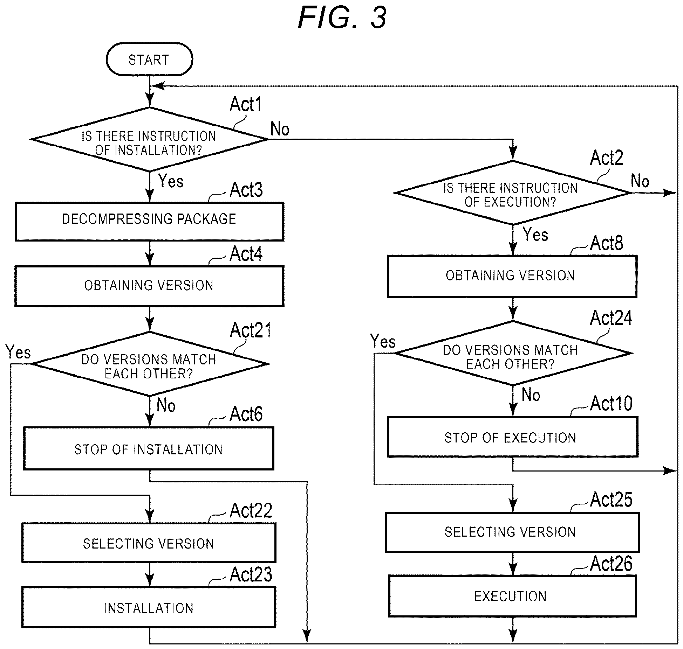

However, the image forming apparatus 10 according to the fourth embodiment is installed with execution environments of a plurality of versions. In addition, the image forming apparatus 10 according to the fourth embodiment stores a program related to control processing depicted in FIG. 3, instead of the control processing depicted in FIG. 2.

Hereinafter, an operation of the image forming apparatus 10 according to the fourth embodiment will be described based on FIG. 3. In addition, contents of processing in the following descriptions of the operation are an example, and in which various processing which can obtain the same result can be appropriately used. FIG. 3 is a flowchart of control processing using the processor 11 of the image forming apparatus 10. The processor 11 executes the control processing based on a control program which is stored in the ROM 12, the auxiliary storage device 14, or the like. In addition, in FIG. 3, the same processing as that in FIG. 2 is attached with the same reference numerals. There is a case in which descriptions of the same processing, or the like, as those in the first to third embodiments are omitted.

In the fourth embodiment, the application is compatible with an execution environment of one or a plurality of versions.

In Act 21, the processor 11 determines whether or not any one of versions denoted by the version information obtained in Act 4 matches any one of the versions in the plurality of execution environments which are installed in the image forming apparatus 10. The processor 11 determines No in Act 21 when the versions do not match, and proceeds to Act 6. In contrast to this, the processor 11 determines Yes in Act 21 when the versions match each other, and proceeds to Act 22.

In Act 22, the processor 11 selects one of execution environments of the versions which match in Act 5 as an execution environment in which the application is to be executed. In addition, when there are a plurality of matched versions of the execution environment, the processor 11 selects an execution environment of a version with the highest priority among them. The priority is high when it is the latest version, for example. Alternatively, for example, the priority is high when it is a version which is executed stably. Alternatively, for example, the priority may be a priority which can be set by a manager, or the like, of the image forming apparatus 10. After Act 22, the processor 11 proceeds to Act 23.

In Act 23, the processor 11 installs the application so as to be executed in an execution environment of the version which is selected in Act 22. Version information included in the installed application denotes one or a plurality of versions. After the processing in Act 23, the processor 11 returns to Act 1.

In Act 24, the processor 11 determines whether or not any one of versions denoted by version information obtained in Act 8 matches any one of versions among a plurality of execution environments which are installed in the image forming apparatus 10. When the versions do not match each other, the processor 11 determines No in Act 24, and proceeds to Act 10. In contrast to this, when the versions match each other, the processor 11 determines Yes in Act 24, and proceeds to Act 25.

In Act 25, the processor 11 selects one of execution environments of the versions which match in Act 9. It is preferable that the version selected at this time is the same as the version which is selected when installing the application to be executed. Alternatively, for example, the processor 11 selects an execution environment of a version with the highest priority in the versions which match in Act 9. After Act 25, the processor 11 proceeds to Act 26.

In Act 26 the processor 11 executes an execution environment of the version selected in Act 25. In addition, the processor 11 executes the installed application in the execution environment. After Act 26, the processor 11 returns to Act 1.

The image forming apparatus 10 according to the fourth embodiment can obtain the same effect as the image forming apparatus 10 according to the first embodiment.

The image forming apparatus 10 according to the fourth embodiment is installed with execution environments of a plurality of versions. In addition, the image forming apparatus 10 changes an execution environment in which the installed application is executed according to a version to which the installed application is compatible. Accordingly, the image forming apparatus 10 can cause the installed application to be normally operated when it is an installed application compatible with any one of versions of the execution environment which are installed in the image forming apparatus 10.

According to the above described embodiments, the installed application is compatible with execution environments of a plurality of versions; accordingly, when a plurality of execution environments are installed in the image forming apparatus 10, the image forming apparatus 10 according to the embodiment can obtain the following effects. That is, the image forming apparatus 10 can cause the installed application to be normally operated, even when a version of an execution environment which has no compatibility with another execution environment is present. In addition, in this manner, when a service person, or the like, wants to install the installed application in the image forming apparatus 10, it is not necessary to provide a plurality of installed applications corresponding to various versions.

### Fifth Embodiment

Hereinafter, an image forming apparatus 10 according to a fifth embodiment will be described. Since the image forming apparatus 10 according to the fifth embodiment has the same configuration as those in the image forming apparatus 10 according to the first to fourth embodiments, descriptions thereof will be omitted.

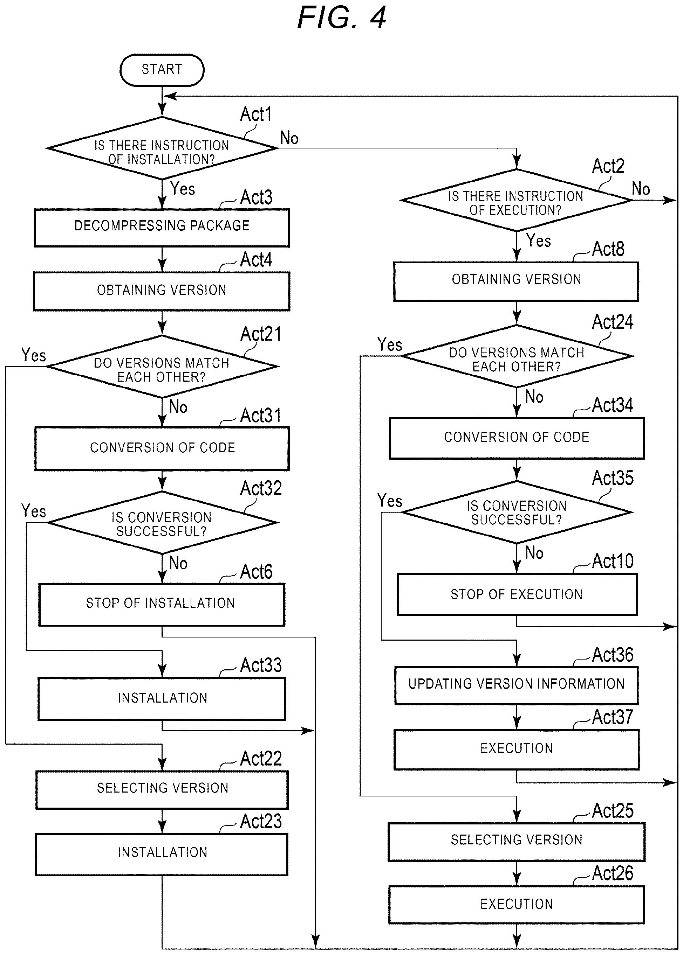

The image forming apparatus 10 according to the fifth embodiment may be installed with execution environments of a plurality of versions, like the fourth embodiment, or may be installed with an execution environment of one version, like the first to third embodiments. The image forming apparatus 10 according to the fifth embodiment stores a program related to control processing depicted in FIG. 4 instead of the control processing depicted in FIG. 2 or FIG. 3.

Hereinafter, an operation of the image forming apparatus 10 according to the fifth embodiment will be described based on FIG. 4. In addition, contents of processing in the following descriptions of the operation are an example, and in which various processing which can obtain the same result can be appropriately used. FIG. 4 is a flowchart of control processing using the processor 11 of the image forming apparatus 10. The processor 11 executes the control processing based on a control program which is stored in the ROM 12, the auxiliary storage device 14, or the like.

In the fifth embodiment, the application is compatible with an execution environment of one or a plurality of versions.

In the fifth embodiment, when it is determined to be No in Act 21, the processor 11 proceeds to Act 31.

In Act 31, the processor 11 converts a code of the application which is to be installed, and conducts a test to see if the converted code can be operated in any one of versions in the execution environments installed in the image forming apparatus 10. When there are the plurality of execution environments which are installed in the image forming apparatus 10, the processor 11 conducts a test to see if the converted code can be operated in an execution environment of a version with the highest priority among them, for example. After Act 31, the processor 11 proceeds to Act 32.

The processor 11 performs the conversion of the code as follows, for example. That is, when a specification of a function is changed in a programming language related to a runtime which is included in an execution environment, and the function is used in a code of the application, the processor 11 rewrites the function as a function which corresponds to the change of specification.

In Act 32, the processor 11 determines whether or not the conversion of the code of the application is successful so that the application can be operated in an execution environment of a desired version after Act 31. When it is not successful in conversion of the code of the installed application, the processor 11 determines No in Act 32, and proceeds to Act 6. In contrast to this, when the conversion of the code of the application is successful, the processor 11 determines Yes in Act 32, and proceeds to Act 33.

In Act 33, the processor 11 installs the application of which the code is converted in Act 31. Version information included in the installed application denotes the version of an execution environment which is set to be operated due to the conversion of the code. After Act 33, the processor 11 returns to Act 1.

In Act 34, the processor 11 converts a code of the installed application which is to be executed, and conducts a test to see if the converted code can be operated in any one of versions in execution environments installed in the image forming apparatus 10. When there are the plurality of execution environments which are installed in the image forming apparatus 10, the processor 11 conducts a test to see if the converted code can be operated in an execution environment of a version with the highest priority among them. After Act 34, the processor 11 proceeds to Act 35.

In Act 35, the processor 11 determines whether or not a conversion of a code of the installed application is successful so that the installed application can be executed in an execution environment of a desired version due to the processing in Act 31. When the conversion of the code of the installed application is not successful, the processor 11 determines No in Act 35, and proceeds to Act 10. In contrast to this, when the conversion of the code of the installed application is successful, the processor 11 determines Yes in Act 35, and proceeds to Act 36.

In Act 36, the processor 11 updates version information included in the installed application of which the code is converted in Act 31, and denotes a version of an execution environment in which the installed application became executable due to the conversion of the code. After Act 36, the processor 11 proceeds to Act 37.

In Act 37, the processor 11 executes the execution environment of the version which is denoted by the version information updated in Act 36. The processor 11 executes the installed application in the execution environment. After Act 37, the processor 11 returns to Act 1.

When the application does not correspond to the execution environment of the version which is installed in the image forming apparatus 10, the image forming apparatus 10 according to the fifth embodiment converts a code of the application, and causes the application to become compatible with the execution environment. Accordingly, even when it is an application which is not compatible with the installed execution environment, the image forming apparatus 10 can cause the application to become compatible with the execution environment using a code conversion.

### Sixth Embodiment

Hereinafter, an image forming apparatus 10 according to a sixth embodiment will be described.

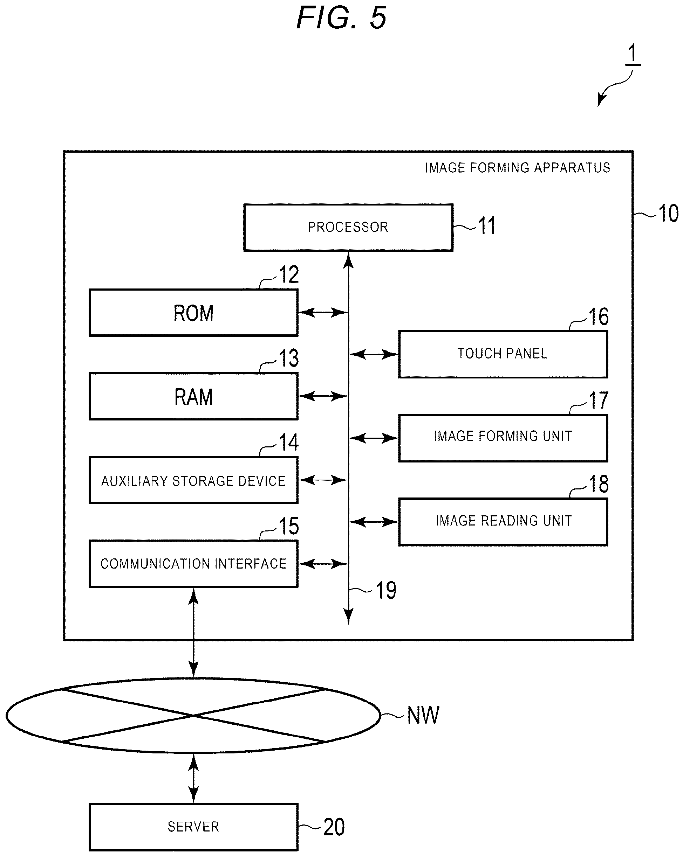

FIG. 5 is a block diagram which illustrates the image forming system 1, and a circuit configuration of main components of the image forming apparatus 10 which are included in the image forming system. The image forming system 1 includes the image forming apparatus 10 and a server 20. The image forming apparatus 10 and the server 20 are connected to a network NW. The network NW may be a communication network including the Internet, typically. The network NW may be a communication network which includes a private network such as an intranet.

Since the image forming apparatus 10 according to the sixth embodiment has the same configuration as that in the image forming apparatus 10 according to the first to fifth embodiments, descriptions thereof will be omitted.

The server 20 stores the plurality of applications in a plurality of versions, respectively. The server 20 has a function of transmitting the application to the image forming apparatus 10.

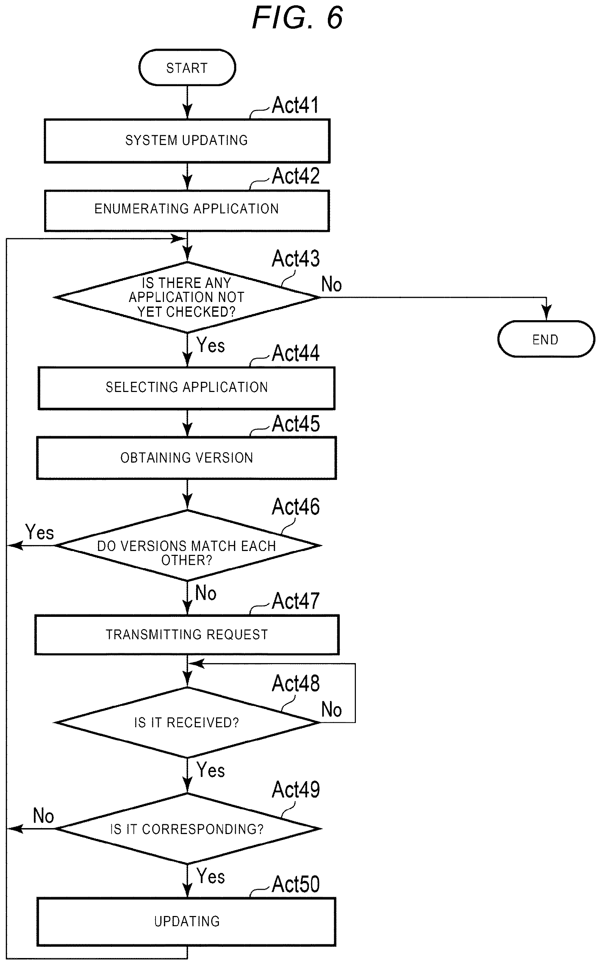

Hereinafter, an operation of the image forming apparatus 10 according to the sixth embodiment will be described based on FIG. 6. In addition, contents of processing in the following descriptions of the operation are an example, and it is possible to appropriately use various processing which can obtain the same result. FIG. 6 is a flowchart of control processing using the processor 11 of the image forming apparatus 10. The processor 11 executes the control processing based on the control program which is stored in the ROM 12, the auxiliary storage device 14, or the like.

When performing updating of system software which includes an execution environment, the processor 11 starts the control processing illustrated in FIG. 6.

In Act 41 in FIG. 6, the processor 11 performs updating of the system software. After the processing in Act 41, the processor 11 proceeds to Act 42.

In Act 42, the processor 11 enumerates the applications which are installed. After the processing in Act 42, the processor 11 proceeds to Act 43.

In Act 43, the processor 11 determines whether or not there is an installed application which is not selected yet in the processing in Act 44, among the installed applications which are enumerated in Act 42. When there is an installed application which is not selected, the processor 11 determines Yes in Act 43, and proceeds to Act 44.

In Act 44, the processor 11 selects one installed application which is not selected yet, among the installed applications which are enumerated in Act 42. After the processing in Act 44, the processor 11 proceeds to Act 45.

In Act 45, the processor 11 obtains version information which is included in the installed application which is selected in Act 44. After the processing in Act 45, the processor 11 proceeds to Act 46.

In Act 46, the processor 11 determines whether or not the version information obtained in Act 45 matches any one of versions among the plurality of execution environments which are installed in the image forming apparatus 10. When the versions match, the processor 11 determines Yes in Act 46, and returns to Act 43. In contrast to this, when the versions do not match, the processor 11 determines No in Act 46, and proceeds to Act 47.

In Act 47, the processor 11 generates a request to be transmitted to the server 20. The request includes version information which denotes a version of the execution environment which is installed in the image forming apparatus 10, specific information which specifies the installed application which is selected in Act 43, and the version information which is obtained in Act 44. In addition, the processor 11 instructs the communication interface 15 so that the generated request is transmitted to the server 20. The communication interface 15 which received the instruction transmits the request to the server 20. The transmitted request is received by the server 20. After Act 47, the processor 11 proceeds to Act 48.

The server 20 which received the request checks whether or not there is a version of the installed application which is specified by the specific information corresponding to the execution environment which is installed in the image forming apparatus 10, in the installed applications which are stored therein. When there is a corresponding version, the server 20 transmits a response including the installed application of the version to the image forming apparatus 10. In contrast to this, when there is no corresponding version, the server 20 transmits a response including information denoting that there is no corresponding version to the image forming apparatus 10.

In Act 48, the processor 11 waits until the response is received using the communication interface 15. When the response is received, the processor 11 determines Yes in Act 48, and proceeds to Act 49.

In Act 49, the processor 11 determines whether or not there is a version corresponding to the installed execution environment, with reference to the request which is received in Act 48. When there is no corresponding version, the processor 11 determines No in Act 49, and returns to Act 43. In contrast to this, the processor 11 refers to the received request, and when there is a corresponding version, the processor determines Yes in Act 49, and proceeds to Act 50.

In Act 50, the processor 11 performs a version upgrade of the installed application which is selected in Act 44 using the installed application which is included in the request which is received in Act 48. After the processing in Act 50, the processor 11 returns to Act 43.

In this manner, the processor 11 performs processing of Act 44 to Act 50 with respect to the installed applications, respectively. In addition, when there is no installed application which is not selected yet in the processing of Act 43, the processor 11 determines Yes, and finishes the processing depicted in FIG. 6.

When a installed application which does not correspond to the version of the execution environment which is installed in the image forming apparatus 10 is installed, the image forming apparatus 10 according to the sixth embodiment obtains the installed application from the server 20, and performs updating thereof. The installed application obtained from the server 20 is a installed application has a version corresponding to the execution environment which is installed in the image forming apparatus 10. Accordingly, the image forming apparatus 10 can cause a installed application to correspond to the execution environment by performing updating, even when it is a installed application which does not correspond to the installed software of the execution environment. In this manner, the image forming apparatus 10 can cause the installed application to be normally executed, even when there is a version of an execution environment which has no compatibility with another execution environment. In addition, even when a installed application does not include version information, the image forming apparatus 10 can cause the installed application to be normally operated, when it is possible to convert a code.

It is also possible to modify the above described embodiment as follows.

The image forming apparatus 10 may store an installation package of an application after installing the application, as well. In addition, when the installed application does not correspond to an execution environment due to a version up of the execution environment, or the like, thereafter, the image forming apparatus 10 may update the installed application so as to correspond to the execution environment using the installation package. The processor 11 performs the updating processing instead of Act 10. In addition, after the updating processing, the processor 11 proceeds to Act 11.

In the above described embodiment, operations of a installed application between execution environments of which version are different were described. However, the embodiment can be applied to operations of a installed application between execution environments of which types are different.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. An image forming apparatus comprising:
a storage device in which an execution environment is installed;
a processor configured to determine whether or not an application is to be installed based on a version of the application and a version of the execution environment, and to install the application upon determining that the version of the application and the version of the execution environment are compatible.

2. The apparatus according to claim 1, wherein the processor does not install the application upon determining that the version of the application and the version of the execution environment are not compatible.

3. The apparatus according to claim 1 or 2, wherein the processor determines that the version of the application and the version of the execution environment are not compatible when the versions do not match.

4. The apparatus according to any one of claims 1 to 3, wherein the application is compatible with a plurality of versions of the execution environment, and the processor selects one of the versions of the execution environment that are compatible with the application as the execution environment in which the application is to be executed.

5. The apparatus according to claim 4, wherein the processor selects a most recent version of said one of the versions of the execution environment that are compatible with the application as the execution environment in which the application is to be executed.

6. The apparatus according to any one of claims 1 to 5, wherein the processor is further configured to determine whether or not an installed application is to be executed in the execution environment based on the version of the installed application and the version of the execution environment, and to execute the installed application in the execution environment upon determining that the version of the installed application and the version of the execution environment are compatible.

7. The apparatus according to claim 6, wherein the processor does not execute the installed application in the execution environment upon determining that the version of the installed application and the version of the execution environment are not compatible.

8. The apparatus according to claim 6, wherein
upon determining that the version of the installed application and the version of the execution environment are not compatible, the processor converts the installed application so that the installed application after conversion is compatible with the version of the execution environment.

9. The apparatus according to any one of claims 1 to 8, wherein
upon determining that the version of the application and the version of the execution environment are not compatible, the processor converts the application so that the application after conversion is compatible with the version of the execution environment.

10. The apparatus according to any one of claims 1 to 9, wherein
upon determining that the version of the application and the version of the execution environment are not compatible, the processor generates a request to be transmitted to a server for a version of the application that is compatible with the version of the execution environment.

11. A method of enforcing compatibility between an application and an execution environment installed in an image forming apparatus, said method comprising:
determining whether or not an application is to be installed in the image forming apparatus based on a version of the application and a version of the execution environment; and
installing the application upon determining that the version of the application and the version of the execution environment are compatible.

12. The method according to claim 11, further comprising:
upon determining that the version of the application and the version of the execution environment are not compatible, not installing the application.

13. The method according to claim 11 or 12, wherein the version of the application and the version of the execution environment are not compatible when the versions do not match.

14. The method according to any one of claims 11 to 13, wherein the application is compatible with a plurality of versions of the execution environment, said method comprising:
selecting one of the versions of the execution environment that are compatible with the application as the execution environment in which the application is to be executed.

15. A non-transitory computer readable medium storing a program causing a computer to execute the method according to any one of claims 11 to 14.
